# EUROPÄISCHE PATENTSCHRIFT

(11) **EP 1 479 718 B1**
(45) Veröffentlichungstag und Bekanntmachung des Hinweises auf die Patenterteilung: **23.04.2014**
(21) Anmeldenummer: 04011035.5
(22) Anmeldetag: 10.05.2004
(51) Int. Cl.: C08K 5/5313

(54) **Titanhaltige Phosphinat-Flammschutzmittel**
Titanium-containing phosphinate flame retardant
Phosphinate ignifuge à base de titane

(30) Priorität: 22.05.2003 DE 10323116
(43) Veröffentlichungstag der Anmeldung: 24.11.2004
(73) Patentinhaber: Clariant Produkte (Deutschland) GmbH, 65929 Frankfurt am Main (DE)
(72) Erfinder: Sicken, Martin, Dr., 51149 Köln (DE); Schlosser, Elke, Dl., 86163 Augsburg (DE)

(56) Entgegenhaltungen:
- EP-A- 1 024 167
- EP-A- 1 024 168

## Beschreibung

Die Erfindung betrifft titanhaltige Phosphinat-Flammschutzmittel und damit flammgeschützte Kunststoff-Formmassen.

Für thermoplastische Polymere haben sich Salze von Phosphinsäuren (Phosphinate) als wirksame flammhemmende Zusätze erwiesen. Zunächst wurden im wesentlichen Alkaliphosphinate beschrieben und deren Flammschutzwirkung in Polyesterformmassen (DE-A-2 252 258) sowie in Polyamiden (DE-A-2 447 727) beansprucht. Später standen vor allem Zinksalze (US-A-4,180,495; US-A-4,208,321) sowie in jüngerer Zeit die Calcium- und Aluminiumphosphinate (EP-A-0 699 708; DE-A-196 07 635) als vermeintlich bestgeeignete Flammschutzmittel dieses Typs im Mittelpunkt des Interesses.

Darüber hinaus wurden synergistische Kombinationen von Phosphinaten mit bestimmten stickstoffhaltigen Verbindungen gefunden, die vielfach als Flammschutzmittel besser wirken, als die Phosphinate allein (WO 97/39053 sowie DE-A-197 34 437 und DE-A-197 37 727).

Die Herstellung von Titan- und Titanylphosphinaten ist bekannt. So wurden verschiedene Herstellmethoden auf Basis der Umsetzung von Phosphinsäuren mit Titanalkoxiden sowie mit Titantetrachlorid beschrieben [G. H. Dahl, B. P. Block, Inorg. Chem. 6 (1967) 1439].

Die EP-A-1 024 168 offenbart flammwidrige duroplastische Massen, die als Flammschutzkomponente ein Phosphinsäuresalz bzw. ein Diphosphinsäuresalz sowie mindestens eine synergetisch wirkende Komponente aus der Substanzreihe Metallhydroxid, Stickstoffverbindung oder Phosphor-Stickstoffverbindung enthalten.

Es werden auch titanhaltige Phosphinsäuresalze beschrieben.

Die EP-A-1 024 167 offenbart eine Flammschutzmittel-Kombination für thermoplastische Polymere, die ein (Di)Phosphinsäuresalz und eine synthetische anorganische Verbindung und/oder ein mineralisches Produkt enthält, wobei die letzteren nur in geringen Mengen zugesetzt werden.

Es wurde nun überraschenderweise gefunden, dass Titan- und Titanylphosphinate eine besonders gute flammhemmende Wirkung in thermoplastischen Polymeren aufweisen und sich in ihren Flammschutz- und sonstigen Polymerwirkungen in eindeutiger Weise positiv von den bislang favorisierten Phosphinaten abheben. Dies ist umso überraschender, da bereits in der Vergangenheit versucht worden ist, die bestgeeignetsten Vertreter dieser Substanzklasse zu ermitteln. Darüber hinaus wurde gefunden, dass auch Kombinationen ebensolcher Titan- und Titanylphosphinate mit Stickstoffverbindungen, wie sie für andere Phosphinate bereits als synergistisch beschrieben wurden (PCT/EP97/01664 sowie DE-A-197 34 437 und DE-A-197 37 727), bezüglich ihrer flammhemmenden und sonstigen Wirkungen in thermoplastischen Kunststoffen eine herausragende Stellung einnehmen.

Gegenstand der vorliegenden Erfindung sind daher Flammschutzmittel, die Titan-und/oder Titanylphosphinate der Formeln (I) und (II) 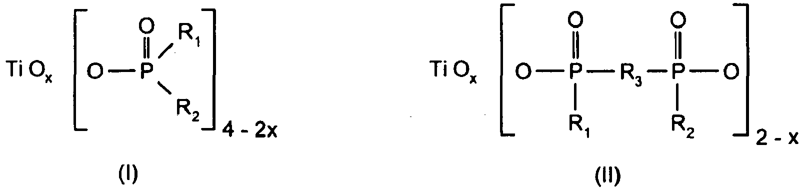 enthalten, in denen R₁ und R₂ gleich oder verschieden sind und ggf. substituierte lineare oder verzweigte oder cyclische C₁-C₁₀-Alkylgruppen oder C₆-C₁₀-Aryl-, C₇-C₁₈-Alkylaryl- oder C₇-C₁₈-Arylalkylgruppen bedeuten und R₃ eine ggf. substituierte lineare oder verzweigte oder cyclische C₁-C₁₀-Alkylengruppe, C₆-C₁₀-Arylen-, C₇-C₁₈-Alkylarylen- oder C₈-C₁₈-Arylalkylengruppe bedeutet und x eine Zahl zwischen 0 und 1,9 ist.

Bevorzugt sind R₁ und R₂ gleich oder verschieden sind und bedeuten Methyl, Ethyl, Propyl, Butyl und/oder Phenyl.

Bevorzugt bedeutet R₃ eine lineare C₁-C₆-Alkylengruppe, Phenylen oder Naphthylen.

Bevorzugt bedeutet R₃ Methylen, Ethylen oder Propylen.

Bevorzugt ist x eine Zahl zwischen 0 und 1,5.

Bevorzugt bedeutet x 1,25 oder 1,0 oder 0.

Gegenstand der Erfindung sind auch Formmassen thermoplastischer oder duroplastischer Polymere, die als Flammschutzmittel (Komponente A) Titan- und Titanylphosphinate der Formeln (I) und (II) 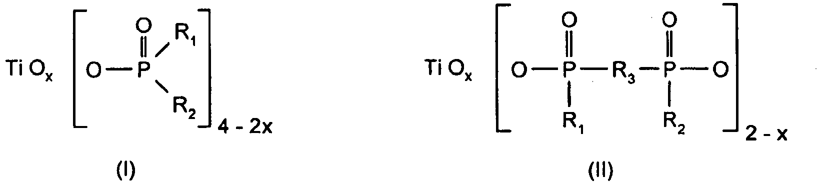 enthalten, in denen R₁ und R₂ gleich oder verschieden sind und ggf. substituierte lineare oder verzweigte oder cyclische C₁-C₁₀-Alkylgruppen oder C₆-C₁₀-Aryl-, C₇-C₁₈-Alkylaryl- oder C₇-C₁₈-Arylalkylgruppen bedeuten und R₃ eine ggf. substituierte lineare oder verzweigte oder cyclische C₁-C₁₀-Alkylengruppe, oder C₆-C₁₀-Arylen-, C₇-C₁₈-Alkylarylen- oder C₈-C₁₈-Arylalkylengruppe bedeutet und x eine Zahl zwischen 0 und 1,9 ist.

Besonders bevorzugt sind R₁ und R₂ gleich oder verschieden und bedeuten Methyl, Ethyl, Propyl, Butyl und/oder Phenyl.

Bevorzugt bedeutet R₃ eine lineare C₁-C₆-Alkylengruppe, Phenylen oder Naphthylen.

Besonders bevorzugt bedeutet R₃ Methylen, Ethylen, Propylen.

Bevorzugt ist x eine Zahl zwischen 0 und 1,5.

Besonders bevorzugt hat x einen Wert von 1,25 oder 1,0 oder 0.

Bevorzugt enthalten die Formmassen das Flammschutzmittel in Mengen von 1 bis 50 Gew.-%, bezogen auf die Formmasse.

Gegenstand der Erfindung sind darüber hinaus Formmassen thermoplastischer oder duroplastischer Polymere, die Phosphinsäuresalze des Titans in Kombination mit synergistisch wirkenden Verbindungen enthalten.

Diese Formmassen sind dadurch gekennzeichnet, dass sie oder das Flammschutzmittel als Komponente B eine Phosphor-, Stickstoff- oder Phosphor-Stickstoff-Verbindung enthalten.

Bevorzugt handelt es sich bei der Komponente B um Melaminphosphat, Dimelaminphosphat, Melaminpyrophosphat, Melaminpolyphosphate, Melampolyphosphate, Melempolyphosphate und/oder Melonpolyphosphate und/oder Melaminkondensationsprodukte wie Melam, Melem und/oder Melon.

Bevorzugt handelt es sich bei der Komponente B um stickstoffhaltige Phosphate der Formeln (NH₄)y H_{3-y} PO₄ bzw. (NH₄ PO₃)_{z}, mit y gleich 1 bis 3 und z gleich 1 bis 10.000.

Bevorzugt handelt es sich bei der Komponente B um Stickstoffverbindungen der Formeln (III) bis (VIII) oder Gemische davon 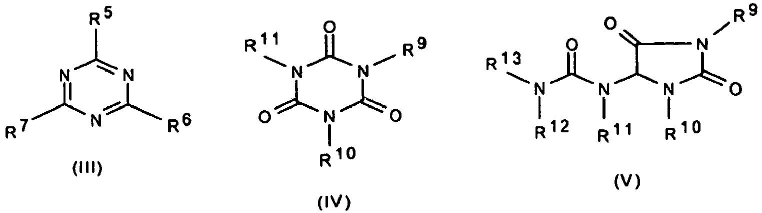 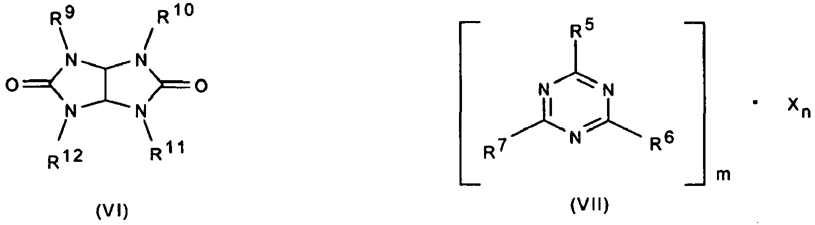 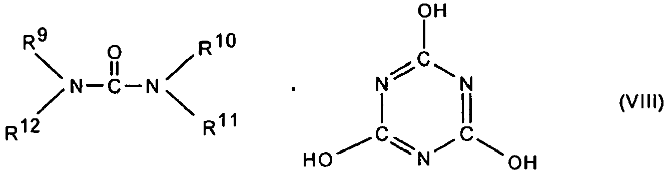 worin
R⁵ bis R⁷ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können, bedeuten.

Oligomere Ester des Tris(hydroxyethyl)isocyanurats mit aromatischen Polycarbonsäuren, wie sie in der EP-A-0 584 567 beschrieben sind, können ebenfalls als Stickstoffverbindungen eingesetzt werden.

Bevorzugt handelt es sich bei der Komponente B um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid und/oder Guanidin.

Bevorzugt enthält die Formmasse die Komponente B in Mengen von 1 bis 30 Gew.-%, bezogen auf die Formmasse.

Bevorzugt enthält die Formmasse oder das Flammschutzmittel weiterhin als Komponente C eine synthetische anorganische Verbindung und/oder ein mineralisches Produkt.

Bevorzugt handelt es sich bei der Komponente C um eine Sauerstoffverbindung des Siliciums, um Magnesiumverbindungen, um Metallcarbonate von Metallen der zweiten Hauptgruppe des Periodensystems, um roten Phosphor, um Zink- oder Aluminiumverbindungen.

Bevorzugt handelt es sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Zinkverbindungen um Zinkoxid, -stannat, -hydroxystannat, -phosphat, -borat oder -sulfide; bei den Aluminiumverbindungen um Aluminiumhydroxid oder -phosphat.

Bevorzugt enthalten die Formmassen das Flammschutzmittel in Mengen von 3 bis 40 Gew.-%, bezogen auf die Formmasse.

Bevorzugt enthalten die Formmassen das Flammschutzmittel in Mengen von 5 bis 20 Gew.-%, bezogen auf die Formmasse.

Besonders bevorzugt enthält die Formmasse die Komponente B in Mengen von 5 bis 15 Gew.-%, bezogen auf die Formmasse.

Bevorzugt enthält die Formmasse oder das Flammschutzmittel die Komponente C in Mengen von 0,1 bis 5 Gew.-%, bezogen auf die Formmasse.

Bevorzugt enthält die Formmasse oder das Flammschutzmittel die Komponente C in Mengen von 0,5 bis 2 Gew.-%, bezogen auf die Formmasse, enthalten.

Bevorzugt handelt es sich bei den erfindungsgemäßen Formmassen um solche die als thermoplastische Polymere Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) enthalten. Polystyrol-HI ist ein Polystyrol mit erhöhter Schlagzähigkeit.

Besonders bevorzugte thermoplastische Polymere sind Polyamide, Polyester und PPE/HIPS Blends.

Unter thermoplastischen Polymeren werden laut Hans Domininghaus in "Die Kunststoffe und ihre Eigenschaften", 5. Auflage (1998), S. 14, Polymere verstanden, deren Molekülketten keine oder auch mehr oder weniger lange und in der Anzahl unterschiedliche Seitenverzweigungen aufweisen, die in der Wärme erweichen und nahezu beliebig formbar sind. Thermoplastische Polymere, die die erfindungsgemäßen Flammschutzmittel-Kombinationen und gegebenenfalls Füll- und Verstärkungsstoffe und/oder andere Zusätze, wie unten definiert, enthalten, werden als Formmassen bezeichnet.

Bevorzugt werden die erfindungsgemäßen flammwidrigen thermoplastischen Polymere zur Herstellung von Polymerformkörpern, -filmen-, -fäden und -fasern sowie sie zur Herstellung von Beschichtungen oder Laminaten verwendet.

Die erfindungsgemäßen Formmassen können dadurch gekennzeichnet sein, dass es sich bei den duroplastischen Polymeren um ungesättigte Polyesterharze oder um Epoxidharze handelt.

Bevorzugt werden diese Formmassen dann zur Herstellung von Beschichtungen oder Laminaten aus duroplastischen Harzen verwendet.

Die Herstellung der erfindungsgemäß eingesetzten Titan- und Titanylphosphinate erfolgt nach an sich bekannten Methoden aus Titantetrachlorid oder Titanalkoxiden, wie Titantetrabutylat, und Phosphinsäuren bzw. deren Salzen oder Estern. Je nach eingesetzter Phosphinsäure, Mengenverhältnis von Titanverbindung zu Phosphinsäure und Herstellmethode erhält man entweder reine Titanphosphinate oder Titanylphosphinate, d.h. solche Titan-Phosphinsäure-Verbindungen, in denen Titan teilweise oxidisch vorliegt. Letztere entstehen vorwiegend, wenn die Herstellung in wässrigem Medium erfolgt.

Die Phosphinate des Titans können monomer vorliegen oder als Koordinationspolymere, in denen die Phosphinsäuren als zweizähnige Chelat-Liganden ebenso wie ggf. vorliegende Oxidbrücken ein polymeres Netzwerk mit Titan als Zentralatom aufbauen.

Geeignete Titanverbindungen zur Herstellung der Titanphosphinate sind die kommerziell erhältlichen Produkte Titantetrachlorid und Titantetrabutylat.

Geeignete Phosphinsäuren als Bestandteil der erfindungsgemäßen Titan- und Titanylphosphinate sind beispielsweise Dimethylphosphinsäure, Ethylmethylphosphinsäure, Diethylphosphinsäure, Ethylbutylphosphinsäure, Dipropylphosphinsäure, Methyl-n-propyl-phosphinsäure, Ethan-1,2-di(methylphosphinsäure), Methan-di(methylphosphinsäure), Hexan-1,6-di(methylphosphinsäure), Benzol-1,4-di(methylphosphinsäure), Methyl-phenylphosphinsäure, Diphenylphosphinsäure.

Bevorzugt handelt es sich bei den Phosphinsäuren um Methylethylphosphinsäure, Diethylphosphinsäure und Ethan-1,2-di(methylphosphinsäure).

Die Menge des den Polymeren zuzusetzenden Titan- bzw. Titanylphosphinates kann innerhalb weiter Grenzen variieren. Im allgemeinen verwendet man 1 bis 50 Gew.-%, bezogen auf die Kunststoff-Formmasse. Die optimale Menge von der zu erzielenden Flammschutz-Spezifikation, von der Natur des Polymeren und ggf. von der Anwesenheit weiterer Flammschutzmittel oder Synergisten, wie den oben beschriebenen Stickstoffverbindungen ab. Bevorzugt sind 3 bis 40 Gew.-%, insbesondere 5 bis 20 Gew.-%, bezogen auf die Kunststoff-Formmasse.

Die vorgenannten Titan- bzw. Titanylphosphinate können zur Herstellung der erfindungsgemäßen Formmassen je nach Art des verwendeten Polymeren und der gewünschten Eigenschaften in verschiedener physikalischer Form angewendet werden. So können die Phosphinsäuresalze z.B. zur Erzielung einer besseren Dispersion im Polymeren zu einer feinteiligen Form vermahlen werden. Falls erwünscht können auch Gemische verschiedener Phosphinsäuresalze eingesetzt werden.

Die Phosphinsäuresalze gemäß der Erfindung sind thermisch stabil, zersetzen die Polymeren weder bei der Verarbeitung noch beeinflussen sie den Herstellprozess der Kunststoff-Formmasse. Die Phosphinsäuresalze sind unter den üblichen Herstellungs- und Verarbeitungsbedingungen für thermoplastische Polymere nicht flüchtig.

Die Menge der den Polymeren ggf. zuzusetzenden Komponente B kann innerhalb weiter Grenzen variieren. Im allgemeinen verwendet man 1 bis 30 Gew.-%, bezogen auf die Kunststoff-Formmasse. Die optimale Menge hängt von der zu erzielenden Flammschutzspezifikation, von der Natur des Polymeren und der Art der eingesetzten Komponente B. Bevorzugt sind 1 bis 30, insbesondere 5 bis 15 Gew.-%.

Zur Herstellung der Formmassen können die erfindungsgemäßen Titan- und Titanylphosphinate bzw. deren Mischungen mit der Komponente B in (thermoplastische) Polymere eingearbeitet werden, indem z. B. alle Bestandteile als Pulver und/oder Granulat in einem Mischer vorgemischt und anschließend in einem Compoundieraggregat (z. B. einem Doppelschneckenextruder) in der Polymerschmelze homogenisiert werden. Die Schmelze wird üblicherweise als Strang abgezogen, gekühlt und granuliert. Die Komponenten können auch separat über eine Dosieranlage direkt in das Compoundieraggregat eingebracht werden.

Es ist ebenso möglich, die flammhemmenden Zusätze einem fertigen Polymergranulat bzw. -pulver beizumischen und die Mischung direkt auf einer Spritzgussmaschine zu Formteilen zu verarbeiten.

Bei Polyestern beispielsweise können die flammhemmenden Zusätze auch bereits während der Polykondensation in die Polyestermasse gegeben werden.

Den Formmassen können neben den erfindungsgemäßen flammhemmenden Stoffen auch Füll- und Verstärkungsstoffe wie Glasfasern, Glaskugeln oder Mineralien wie Kreide zugesetzt werden. Zusätzlich können die Formmassen noch andere Zusätze wie Antioxidantien, Lichtschutzmittel, Gleitmittel, Farbmittel, Nukleierungsmittel oder Antistatika enthalten. Beispiele für die verwendbaren Zusätze sind in EP-A-0 584 567 angegeben.
Die flammwidrigen Kunststoff-Formmassen eignen sich zur Herstellung von Formkörpern, Filmen, Fäden und Fasern, z. B. durch Spritzgießen, Extrudieren oder Verpressen.

Sollen duroplastische Formmassen hergestellt werden, so stehen verschiedene Verfahren hierfür zur Verfügung. Beispielsweise kann ein duroplastisches Harz mit dem erfindungsgemäßen Flammschutzmittel und ggf. den Komponenten B und C vermischt werden und die resultierende Mischung wird dann bei Drücken von 3 bis 10 bar und Temperaturen von 20 bis 80 °C nass gepresst (Kaltpressung).

Alternativ kann diese Nass-Pressung auch bei Drücken von 3 bis 10 bar und Temperaturen von 80 bis 150°C erfolgen (Warm- oder Heißpressung).

Schließlich kann man auch ein duroplastisches Harz mit einer mit dem erfindungsgemäßen Flammschutzmittel und ggf. den Komponenten B und C vermischen und dann und aus der resultierenden Mischung bei Drücken von 50 bis 150 bar und Temperaturen von 140 bis 160 °C Kunstharzmatten fertigen.

### Beispiele

### 1. Herstellung von Titanphosphinaten

### 1.1. Herstellung von Titanylphosphinat aus Titantetrabutylat mit R₁, R₂ = Ethyl und einer Bruttozusammensetzung entsprechend x = 1 in Formel (I):

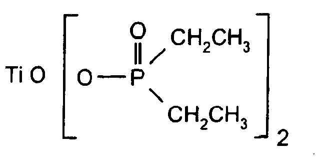

244 g (2 Mol) Diethylphosphinsäure und 340 g (1 Mol) Titantetrabutylat werden 4 h auf 130 - 140°C unter Rückfluss des entsehenden Butanols erhitzt. Die entstehende Lösung wird anschließend in 2,5 L siedendes Wasser eingetragen und weitere 30 min zum Sieden erhitzt. Der entstandene Feststoff wird abfiltriert und bei 175°C getrocknet. Man erhält so 332 g Titanylbis(diethylphosphinat) (= 96% d Th.) in Form eines weißen Pulvers, das bis 300°C nicht schmilzt. Elementaranalyse: Phosphor (gef.: 19,8 %; Th.: 20,1 %); Titan: (gef.: 15,6 %; Th.: 15,6 %).

### 1.2. Herstellung von Titanylphosphinat aus Titantetrachlorid mit R₁, R₂ = Ethyl und einer Bruttozusammensetzung entsprechend x = 1,25 in Formel (I):

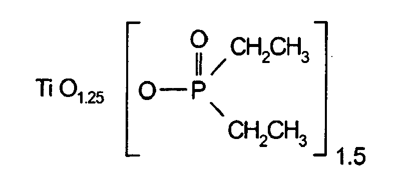

Zu einer Lösung von 183 g (1,5 Mol) Diethylphosphinsäure in 400 ml Wasser wird unter Rühren und externer Eiskühlung langsam 190 g (1 Mol) Titantetrachlorid zugefügt. Die entstehende klare Lösung wird nach Zugabe weiterer 300 ml Wasser durch Zugabe von 320 g 50%iger Natronlauge neutralisiert und 2 h zum Sieden erhitzt. Der bei der Neutralisation entstandene Feststoff wird abfiltriert, in 600 ml frischem Wasser aufgenommen und zur Freisetzung von Chlorid-Restmengen weitere 20 h unter Rückfluss erhitzt. Nach dem Abkühlen wird der Feststoff abfiltriert und bei 130°C und 30 mbar vakuumgetrocknet. Man erhält so 196 g Titanylbis(diethylphosphinat) (= 78 % d Th.) in Form eines weißen Pulvers, das bis 300°C nicht schmilzt. Elementaranalyse: Phosphor (gef.: 18,1 %; Th.: 18,5 %); Titan: (gef.: 19,3 %; Th.: 19,1 %).

### 1.3. Herstellung von Titanphosphinat aus Titantetrabutylat mit R₁, R₂ = Ethyl und einer Bruttozusammensetzung entsprechend x = 0 in Formel (I):

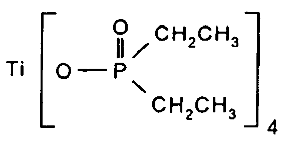

122 g (1 Mol) Diethylphosphinsäure und 85 g (0,25 Mol) Titantetrabutylat werden in 500 ml Toluol 40 h unter Rückfluss erhitzt. Währenddessen wird nach jeweils 8 h ca. 100 ml des Toluols zusammen mit dem entstandenen Butanol abdestilliert und durch frisches Toluol ersetzt. Die entstehende Lösung wird anschließend vom eingesetzten Lösungsmittel befreit. Man erhält so 132 g Titantetrakis(diethylphosphinat) (= 100 % d Th.) in Form einer hochviskosen Flüssigkeit. Elementaranalyse: Phosphor (gef.: 22,0 %; Th.: 23,1%); Titan: (gef.: 8,7 %; Th.: 8,9 %).

### 2. Eingesetzte Komponenten

### 2.1. Handelsübliche Polymere (Granulate):

- Polyamid 6 (PA 6-GV):: ®Durethan BKV 30 (Fa. Bayer AG, D) enthält 30 % Glasfasern.
- Polyamid 6.6 (PA 6.6-GV):: ®Durethan AKV 30 (Fa. Bayer AG, D) enthält 30 % Glasfasern.
- Polybutylenterephthalat (PBT-GV):: ®Celanex 2300 GV1/30 (Fa. Ticona, D) enthält 30 % Glasfasern.

### 2.2. Flammschutzmittelkomponenten (pulverförmig):

Aluminiumsalz der Diethylphosphinsäure, im folgenden als DEPAL bezeichnet. Melapur® MC (Melamincyanurat), Fa. DSM Melapur, NL
Melapur 200 (Melaminpolyphosphat), Fa. DSM Melapur, NL
Titanylphosphinat entsprechend Beispiel 1.1., im folgenden als DEPTi (x=1 ) bezeichnet.
Titanylphosphinat entsprechend Beispiel 1.2., im folgenden als DEPTi (x=1,25) bezeichnet.
Titanphosphinat entsprechend Beispiel 1.3., im folgenden als DEPTi (x=0) bezeichnet.
Zinksalz der Diethylphosphinsäure, im folgenden als DEPZN bezeichnet.

### 3. Herstellung, Verarbeitung und Prüfung von flammhemmenden Kunststoff-Formmassen

Die Flammschutzmittelkomponenten wurden in dem in den Tabellen angegebenen Verhältnis mit dem Polymergranulat und evtl. Additiven vermischt und auf einem Doppelschnecken-Extruder (Typ Leistritz LSM 30/34) bei Temperaturen von 240 bis 280°C (PBT-GV bzw. PA 6-GV) bzw. von 260 bis 300°C (PA 6.6-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Toshiba IS 100 EN) bei Massetemperaturen von 260 bis 280°C (PBT-GV bzw. PA 6-GV) bzw. von 270 bis 300°C (PA 6.6-GV) zu Prüfkörpern verarbeitet und anhand des UL 94-Tests (Underwriter Laboratories) auf Flammwidrigkeit geprüft und klassifiziert.

Tabelle 1 zeigt Vergleichsbeispiele, in denen das Aluminiumsalz der Diethylphosphinsäure (DEPAL) bzw. das Zinksalz der Diethylphosphinsäure (DEPZn) bzw. Melaminpolyphosphat bzw. Melamincyanurat als alleinige Flammschutzmittelkomponenten in glasfaserverstärktem PA6, PA 6.6 bzw. PBT geprüft wurden.

Tabelle 2 zeigt Vergleichsbeispiele, in denen das Aluminiumsalz der Diethylphosphinsäure bzw. das Zinksalz der Diethylphosphinsäure in Kombination mit stickstoffhaltigen Synergisten, wie in der PCT/WO 97/01664 beschrieben, in glasfaserverstärktem PA6, PA 6.6 bzw. PBT geprüft wurden.

Die Ergebnisse der Beispiele, in denen Titan- bzw. Titanylphosphinate gemäß der Erfindung eingesetzt wurden, sind in Tabelle 3 aufgelistet. Alle Mengen sind als Gew.-% angegeben und beziehen sich auf die Kunststoff-Formmasse einschließlich der Flammschutzmittel.

Aus den Beispielen geht hervor, dass die Titan- bzw. Titanylsalze der Phosphinate gemäß der Erfindung eine deutlich bessere flammhemmende Wirkung in thermoplastischen Polymeren aufweisen als die bisher beschriebenen Phosphinate. Die Flammschutzmittelmenge bezogen auf die Kunststoff-Formmasse, die nötig ist, um eine V-0, V-1 bzw. V-2 Einstufung zu erreichen, kann bei der Verwendung der erfindungsgemäßen Titan- bzw. Titanylphosphinate deutlich verringert werden.

Die Einsatzmenge an Flammschutzmittel zum Erreichen einer bestimmten Brandklasse kann somit erheblich reduziert werden, was sich sowohl positiv auf die mechanische Charakteristik der Kunststoff-Formmasse auswirkt als auch ökologische sowie ökonomische Vorteile mit sich bringt.

**Tabelle 1: Vergleichsbeispiele**

| Aluminium- bzw. Zink-Phosphinate bzw. Melaminpolyphosphat bzw. -cyanurat jeweils allein in glasfaserverstärktem PBT bzw. PA 6.6. | | | | | | |
|---|---|---|---|---|---|---|
| Polymer | DEPAL [%] | DEPZN [%] | Melaminpoly -phosphat [%] | Melamin -cyanurat [%] | Klasse nach UL 94 (1,6 mm) | Nachbrennzeiten^{**)} [s] |
| PBT-GV | 17 | | | | V-1 | 12/10 |
| PBT-GV | | 20 | | | V-2 | 10/5 |
| PBT-GV | | | 20 | | V-2 | 11/5 |
| PBT-GV | | | | 25 | n.k.^{*)} | 34/9 |
| PA 6-GV | 20 | | | | V-2 | 8/15 |
| PA 6.6-GV | 20 | | | | n.k.^{*)} | 17/27 |
| PA 6.6-GV | 25 | | | | n.k.^{*)} | 10/27 |
| PA 6.6-GV | | 20 | | | V-2 | 14/4 |
| PA 6.6.-GV | | | 20 | | V-2 | 19/7 |

| | | | | | | |
|---|---|---|---|---|---|---|
| ^{*)} n.k. = nicht klassifizierbar | | | | | | |
| ^{**)} durchschnittliche Brennzeiten nach dem 1. / 2. Beflammen (5 Prüfkörper) | | | | | | |

**Tabelle 2: Vergleichsbeispiele**

| Aluminium- bzw. Zink-Phosphinat in Kombination mit stickstoffhaltigen Synergisten in glasfaserverstärktem PBT bzw. PA 6.6. | | | | | | |
|---|---|---|---|---|---|---|
| Polymer | DEPAI [%] | DEPZn [%] | Melamin-cyanurat [%] | Melaminpoly -phosphat [%] | Klasse nach UL 94 (1,6 mm) | Nachbrennzeiten^{**)} [s] |
| PBT-GV | | 10 | 10 | | n.k.^{*)} | 25/20 |
| PBT-GV | | 10 | | 10 | V-2 | 5/3 |
| PA 6.6-GV | 20 | | 10 | | n.k.^{*)} | 2/53 |

| | | | | | | |
|---|---|---|---|---|---|---|
| ^{*)} n.k. = nicht klassifizierbar | | | | | | |
| ^{**)} durchschnittliche Brennzeiten nach dem 1. / 2. Beflammen (5 Prüfkörper) | | | | | | |

**Tabelle 3: Erfindung.**

| Titan- bzw. Titanylphosphinat allein bzw. in Kombination mit Melamincyanurat in glasfaserverstärktem PBT bzw. PA 6.6. | | | | | | |
|---|---|---|---|---|---|---|
| Polymer | DEPTi (x=1) [%] | DEPTi (x=1,25) [%] | DEPTi (x=0) [%] | Melamin-cyanurat [%] | Klasse nach UL 94 (1,6 mm) | Nachbrennzeiten^{**)} [s] |
| PBT-GV | 15 | | | | V-1 | 3/12 |
| PBT-GV | | 15 | | | V-1 | 3/8 |
| PBT-GV | | | 15 | | V-1 | 1/8 |
| PBT-GV | 10 | | | 10 | V-0 | 2/2 |
| PBT-GV | | 10 | | 10 | V-0 | 1/1 |
| PBT-GV | | | 10 | 10 | V-0 | 1/2 |
| PA 6- GV | | | 15 | | V-0 | 1/3 |
| PA 6.6-GV | 20 | | | | V-0 | 0/1 |
| PA 6.6-GV | | 20 | | | V-0 | 0/0 |
| PA 6.6-GV | | | 20 | | V-0 | 0/0 |

| | | | | | | |
|---|---|---|---|---|---|---|
| ^{*)} n.k. = nicht klassifizierbar ^{**)} durchschnittliche Brennzeiten nach dem 1. / 2. Beflammen (5 Prüfkörper) | | | | | | |

## Patentansprüche

1. Flammschutzmittel, die Titan- und/oder Titanylphosphinate der Formeln (I) und (II) 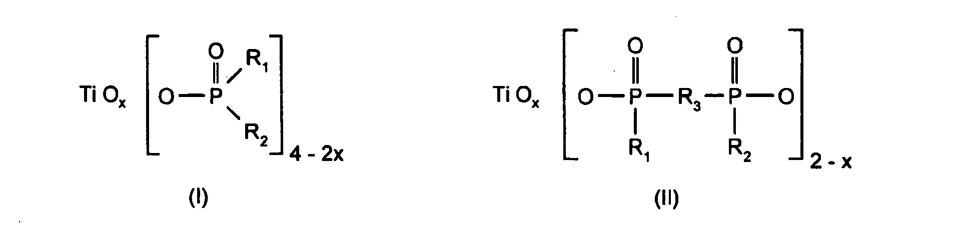 enthalten, in denen R₁ und R₂ gleich oder verschieden sind und ggf. substituierte lineare oder verzweigte oder cyclische C₁-C₁₀-Alkylgruppen oder C₆-C₁₀-Aryl-, C₇-C₁₈-Alkylaryl- oder C₇-C₁₈-Arylalkylgruppen bedeuten und R₃ eine ggf. substituierte lineare oder verzweigte oder cyclische C₁-C₁₀-Alkylengruppe, C₆-C₁₀-Arylen-, C₇-C₁₈-Alkylarylen- oder C₈-C₁₈-Arylalkylengruppe bedeutet und x eine Zahl zwischen 0 und 1,9 ist.

2. Flammschutzmittel nach Anspruch 1, **dadurch gekennzeichnet, dass** R₁ und R₂ gleich oder verschieden sind und Methyl, Ethyl, Propyl, Butyl oder Phenyl bedeuten.

3. Flammschutzmittel nach Anspruch 1 oder 2, **dadurch gekennzeichnet, dass** R₃ eine lineare C₁-C₆-Alkylengruppe, Phenylen oder Naphthylen bedeutet.

4. Flammschutzmittel nach einem oder mehreren der Ansprüche 1 bis 3, **dadurch gekennzeichnet, dass** R₃ Methylen, Ethylen oder Propylen bedeutet.

5. Flammschutzmittel nach einem oder mehreren der Ansprüche 1 bis 4, **dadurch gekennzeichnet, dass** x eine Zahl zwischen 0 und 1,5 ist.

6. Flammschutzmittel nach einem oder mehreren der Ansprüche 1 bis 5, **dadurch gekennzeichnet, dass** x 1,25 oder 1,0 oder 0 bedeutet.

7. Formmassen thermoplastischer oder duroplastischer Polymere, **dadurch gekennzeichnet, dass** sie als Flammschutzmittel (Komponente A) Titan- und/oder Titanylphosphinate der Formeln (I) und (II) 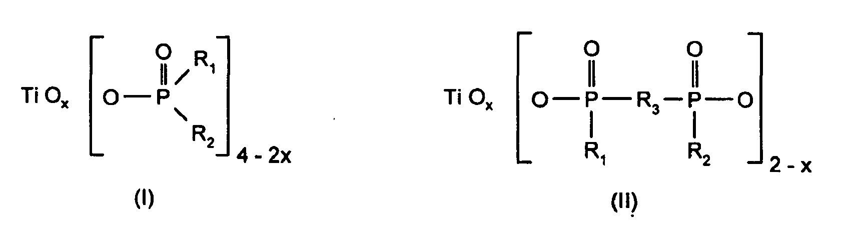 in denen R₁ und R₂ gleich oder verschieden sind und ggf. substituierte lineare oder verzweigte oder cyclische C₁-C₁₀-Alkylgruppen oder C₆-C₁₀-Aryl-, C₇-C₁₈-Alkylaryl- oder C₇-C₁₈-Arylalkylgruppen bedeuten und R₃ eine ggf. substituierte lineare oder verzweigte oder cyclische C₁-C₁₀-Alkylengruppe, C₆-C₁₀-Arylen-, C₇-C₁₈-Alkylarylen- oder C₈-C₁₈-Arylalkylengruppe bedeutet und x eine Zahl zwischen 0 und 1,9 ist enthalten.

8. Formmassen nach Anspruch 7, **dadurch gekennzeichnet, dass** R₁ und R₂ gleich oder verschieden sind und Methyl, Ethyl, Propyl, Butyl oder Phenyl bedeuten.

9. Formmassen nach Anspruch 7 oder 8, **dadurch gekennzeichnet, dass** R₃ eine lineare C₁-C₆-Alkylengruppe, Phenylen oder Naphthylen bedeutet.

10. Formmassen nach einem oder mehreren der Ansprüche 7 bis 9, **dadurch gekennzeichnet, dass** R₃ Methylen, Ethylen oder Propylen bedeutet.

11. Formmassen nach einem oder mehreren der Ansprüche 7 bis 10, **dadurch gekennzeichnet, dass** x eine Zahl zwischen 0 und 1,5 ist.

12. Formmassen nach einem oder mehreren der Ansprüche 7 bis 11, **dadurch gekennzeichnet, dass** x 1,25 oder 1,0 oder 0 bedeutet.

13. Formmassen nach einem oder mehreren der Ansprüche 7 bis 12, **dadurch gekennzeichnet, dass** sie das Flammschutzmittel in Mengen von 1 bis 50 Gew.-%, bezogen auf die Formmasse, enthalten.

14. Formmassen nach einem oder mehreren der Ansprüche 7 bis 13, **dadurch gekennzeichnet, dass** sie oder das Flammschutzmittel als Komponente B eine Phosphor-, Stickstoff- oder Phosphor-Stickstoff-Verbindung enthalten.

15. Formmassen nach einem oder mehreren der Ansprüche 7 bis 14, **dadurch gekennzeichnet, dass** es sich bei der Komponente B um Melaminphosphat, Dimelaminphosphat, Melaminpyrophosphat, Melaminpolyphosphate, Melampolyphosphate, Melempolyphosphate und/oder Melonpolyphosphate und/oder Melaminkondensationsprodukte wie Melam, Melem und/oder Melon handelt.

16. Formmassen nach einem oder mehreren der Ansprüche 7 bis 14, **dadurch gekennzeichnet, dass** es sich bei der Komponente B um stickstoffhaltige Phosphate der Formeln (NH₄)_{y} H_{3-y} PO₄ bzw. (NH₄ PO₃)_{z}, mit y gleich 1 bis 3 und z gleich 1 bis 10.000, handelt.

17. Formmassen nach einem oder mehreren der Ansprüche 7 bis 14, **dadurch gekennzeichnet, dass** es sich bei der Komponente B um Stickstoffverbindungen der Formeln (III) bis (VIII) oder Gemische davon 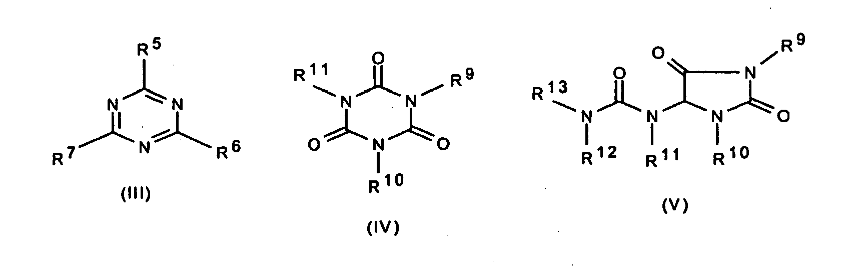 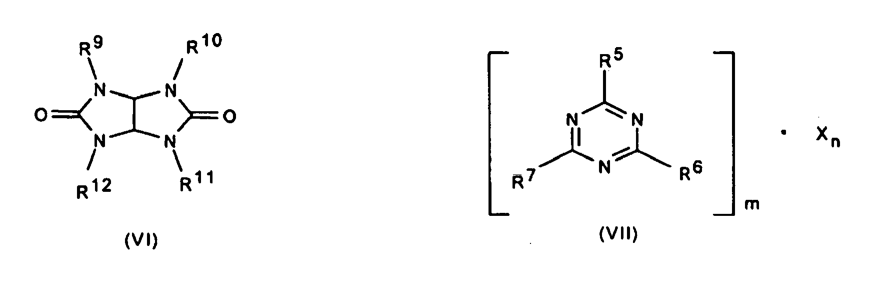 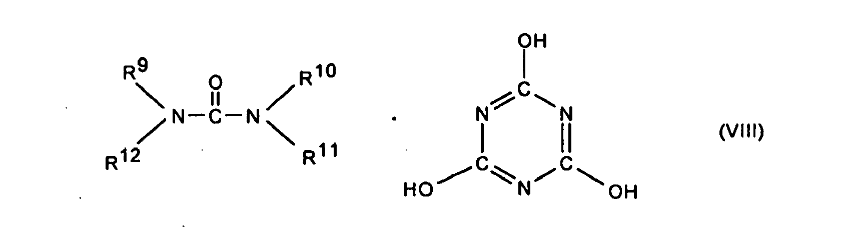 worin
R⁵ bis R⁷ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können, bedeuten, handelt.

18. Formmassen nach einem oder mehreren der Ansprüche 7 bis 14, **dadurch gekennzeichnet, dass** es sich bei der Komponente B um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid und/oder Guanidin handelt.

19. Formmassen nach einem oder mehreren der Ansprüche 7 bis 18, **dadurch gekennzeichnet, dass** sie die Komponente B in Mengen von 1 bis 30 Gew.-%, bezogen auf die Formmasse, enthalten.

20. Formmassen nach einem oder mehreren der Ansprüche 7 bis 19, **dadurch gekennzeichnet, dass** sie oder das Flammschutzmittel weiterhin als Komponente C eine synthetische anorganische Verbindung und/oder ein mineralisches Produkt enthalten.

21. Formmassen nach Anspruch 20, **dadurch gekennzeichnet, dass** es sich bei der Komponente C um eine Sauerstoffverbindung des Siliziums, um Magnesiumverbindungen, um Metallcarbonate von Metallen der zweiten Hauptgruppe des Periodensystems, um roten Phosphor, um Zink- oder Aluminiumverbindungen handelt.

22. Formmassen nach Anspruch 20 oder 21, **dadurch gekennzeichnet, dass** sich bei den Sauerstoffverbindungen des Siliziums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Zinkverbindungen um Zinkoxid, -stannat, -hydroxystannat, -phosphat, -borat oder -sulfide; bei den Aluminiumverbindungen um Aluminiumhydroxid oder -phosphat handelt.

## Claims

1. A flame retardant which comprises titanium phosphinates and/or titanyl phosphinates of the formulae (I) and (II) 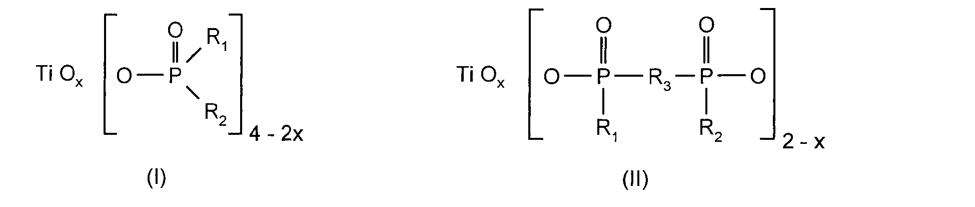 where R₁ and R₂ are identical or different and are unsubstituted or substituted linear or branched or cyclic C₁-C₁₀-alkyl groups or C₆-C₁₀-aryl, C₇-C₁₈-alkylaryl, or C₇-C₁₈-arylalkyl groups, and R₃ is an unsubstituted or substituted linear or branched or cyclic C₁-C₁₀-alkylene group, C₆-C₁₀-arylene, C₇-C₁₈-alkylarylene, or C₈-C₁₈-arylalkylene group, and x is a number from 0 to 1.9.

2. The flame retardant as claimed in claim 1, wherein R₁ and R₂ are identical or different and are methyl, ethyl, propyl, butyl, or phenyl.

3. The flame retardant as claimed in claim 1 or 2, wherein R₃ is a linear C₁-C₆-alkylene group, phenylene, or naphthylene.

4. The flame retardant as claimed in one or more of claims 1 to 3, wherein R₃ is methylene, ethylene, or propylene.

5. The flame retardant as claimed in one or more of claims 1 to 4, wherein x is a number from 0 to 1.5.

6. The flame redardant as claimed in one or more of claims 1 to 5, wherein x is 1.25 or 1.0 or 0.

7. A molding composition of thermoplastic or thermoset polymers which comprises, as flame retardant (component A), titanium phosphinates and/or titanyl phosphinates of the formulae (I) and (II) 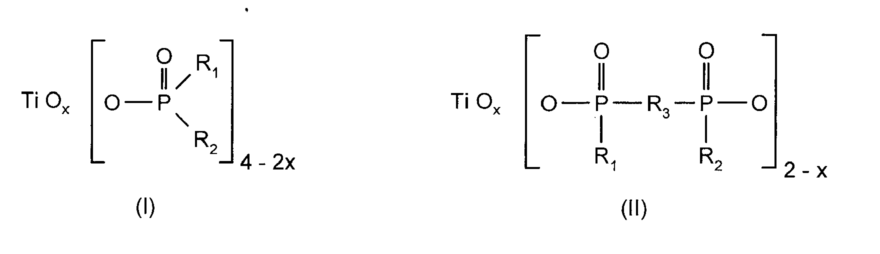 where R₁ and R₂ are identical or different and are unsubstituted or substituted linear or branched or cyclic C₁-C₁₀-alkyl groups or C₆-C₁₀-aryl, C₇-C₁₈-alkylaryl, or C₇-C₁₈-arylalkyl groups, and R₃ is an unsubstituted or substituted linear or branched or cyclic C₁-C₁₀-alkylene group, C₆-C₁₀-arylene, C₇-C₁₈-alkylarylene, or C₈-C₁₈-arylalkylene group, and x is a number from 0 to 1.9.

8. The molding composition as claimed in claim 7, wherein R₁ and R₂ are identical or different and are methyl, ethyl, propyl, butyl or phenyl.

9. The molding composition as claimed in claim 7 or 8, wherein R₃ is a linear C₁-C₆-alkylene group, phenylene, or naphthylene.

10. The molding composition as claimed in one or more of claims 7 to 9, wherein R₃ is methylene, ethylene, or propylene.

11. The molding composition as claimed in one or more of claims 7 to 10, wherein x is a number from 0 to 1.5.

12. The molding composition as claimed in one or more of claims 7 to 11, wherein x is 1.25 or 1.0 or 0.

13. The molding composition as claimed in one or more of claims 7 to 12, which comprises from 1 to 50% by weight of the flame retardant, based on the molding composition.

14. The molding composition as claimed in one or more of claims 7 to 13, which comprises, or wherein the flame retardant comprises, a phosphorus compound, nitrogen compound, or phosphorus-nitrogen compound, as component B.

15. The molding composition as claimed in one or more of claims 7 to 14, wherein component B comprises melamine phosphate, dimelamine phosphate, melamine pyrophosphate, melamine polyphosphates, melam polyphosphates, melem polyphosphates, and/or melon polyphosphates, and/or melamine condensates, such as melam, melem, and/or melon.

16. The molding composition as claimed in one or more of claims 7 to 14, wherein component B comprises nitrogen-containing phosphates of the formulae (NH₄)_{y} H_{3-y} PO₄ or (NH₄ PO₃)_{z}, where y is from 1 to 3 and z is from 1 to 10 000.

17. The molding composition as claimed in one or more of claims 7 to 14, wherein component B comprises nitrogen compounds of the formulae (III) to (VIII), or a mixture of these, 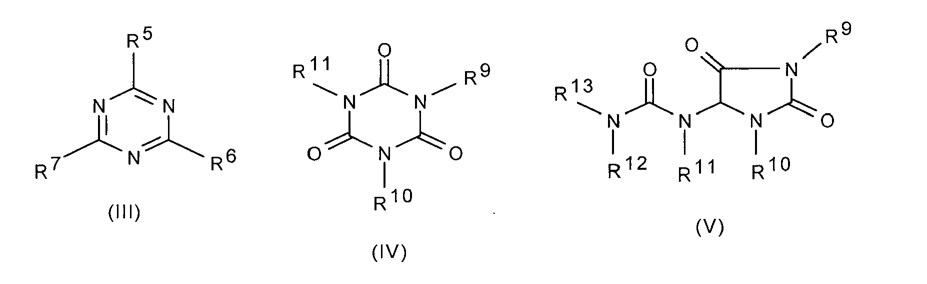 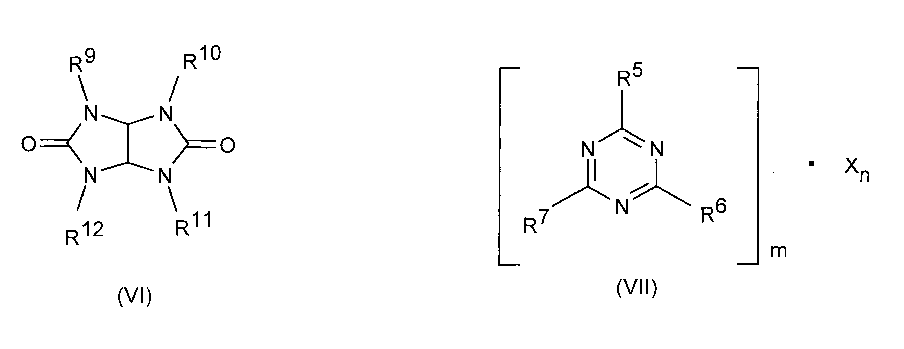 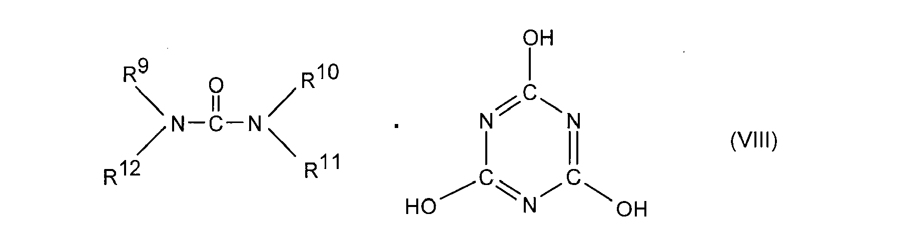 where
R⁵ to R⁷ are hydrogen, C₁-C₈-alkyl, C₅-C₁₆-cycloalkyl or -alkylcycloalkyl, unsubstituted or substituted with a hydroxy or a C₁-C₄-hydroxyalkyl function, C₂-C₈-alkenyl, C₁-C₈-alkoxy, -acyl, -acyloxy, C₆-C₁₂-aryl or -arylalkyl, -OR⁸, or -N(R⁸)R⁹, or else a system of N-alicyclic or N-aromatic nature,
R⁸ is hydrogen, C₁-C₈-alkyl, C₅-C₁₆-cycloalkyl or -alkylcycloalkyl, unsubstituted or substituted with a hydroxy or a C₁-C₄-hydroxyalkyl function, C₂-C₈-alkenyl, C₁-C₈-alkoxy, -acyl, -acyloxy, or C₆-C₁₂-aryl or -arylalkyl,
R⁹ to R¹³ are the same as the groups for R⁸, or else -O-R⁸,
m and n, independently of one another, are 1, 2, 3, or 4,
X is acids which can form adducts with triazine compounds (III).

18. The molding composition as claimed in one or more of claims 7 to 14, wherein component B comprises oligomeric esters of tris(hydroxyethyl) isocyanurate with aromatic polycarboxylic acids, benzoguanamine, tris(hydroxyethyl) isocyanurate, allantoin, glycoluril, melamine, melamine cyanurate, dicyandiamide and/or guanidine.

19. The molding composition as claimed in one or more of claims 7 to 18, which comprises from 1 to 30% by weight of component B, based on the molding composition.

20. The molding composition as claimed in one or more of claims 7 to 19, which also comprises, or wherein the flame retardant also comprises, a synthetic inorganic compound and/or a mineral product, as component C.

21. The molding composition as claimed in claim 20, wherein component C comprises an oxygen compound of silicon, comprises magnesium compounds, comprises metal carbonates of metals of the second main group of the Periodic Table of the Elements, comprises red phosphorus, comprises zinc compounds, or comprises aluminum compounds.

22. The molding composition as claimed in claim 20 or 21, wherein the oxygen compounds of silicon comprise salts and esters of orthosilicic acid or condensates thereof, comprise silicates, zeolites and silicas, comprise glass, glass/ceramic, or ceramic powder; the magnesium compounds comprise magnesium hydroxide, hydrotalcites, magnesium carbonates, or magnesium calcium carbonates; the zinc compounds comprise zinc oxide, zinc stannate, zinc hydroxystannate, zinc phosphate, zinc borate, or zinc sulfides; the aluminum compounds comprise aluminum hydroxide or aluminum phosphate.

## Revendications

1. Agents ignifuges, qui contiennent des phosphinates de titane et/ou de titanyle des formules (I) et (II) 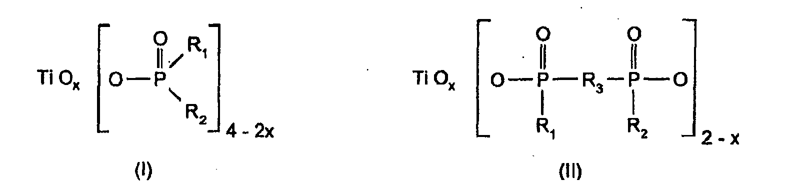 dans lesquelles R₁ et R₂ sont identiques ou différents et signifient des groupes C₁-C₁₀-alkyle linéaires ou ramifiés ou cycliques, le cas échéant substitués ou des groupes C₆-C₁₀-aryle, C₇-C₁₈-alkylaryle ou C₇-C₁₈-arylalkyle et R₃ signifie un groupe C₁-C₁₀-alkylène linéaire ou ramifié ou cyclique, le cas échéant substitué, un groupe C₆-C₁₀-arylène, C₇-C₁₈-alkylarylène ou C₈-C₁₈-arylalkylène et x vaut un nombre entre 0 et 1,9.

2. Agents ignifuges selon la revendication 1, **caractérisés en ce que** R₁ et R₂ sont identiques ou différents et signifient méthyle, éthyle, propyle, butyle ou phényle.

3. Agents ignifuges selon la revendication 1 ou 2, **caractérisés en ce que** R₃ signifie un groupe C₁-C₆-alkylène linéaire, phénylène ou naphtylène.

4. Agents ignifuges selon l'une ou plusieurs des revendications 1 à 3, **caractérisés en ce que** R₃ signifie méthylène, éthylène ou propylène.

5. Agents ignifuges selon l'une ou plusieurs des revendications 1 à 4, **caractérisés en ce que** x vaut un nombre entre 0 et 1,5.

6. Agents ignifuges selon l'une ou plusieurs des revendications 1 à 5, **caractérisés en ce que** x vaut 1,25 ou 1,0 ou 0.

7. Masses moulées de polymères thermoplastiques ou thermodurcissables, **caractérisées en ce qu'**elles contiennent, comme agent ignifuge (composant A), des phosphinates de titane et/ou de titanyle des formules (I) et (II) 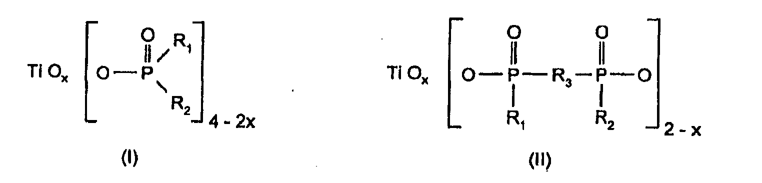 dans lesquelles R₁ et R₂ sont identiques ou différents et signifient des groupes C₁-C₁₀-alkyle linéaires ou ramifiés ou cycliques, le cas échéant substitués ou des groupes C₆-C₁₀-aryle, C₇-C₁₈-alkylaryle ou C₇-C₁₈-arylalkyle et R₃ signifie un groupe C₁-C₁₀-alkylène linéaire ou ramifié ou cyclique, le cas échéant substitué, un groupe C₆-C₁₀-arylène, C₇-C₁₈-alkylarylène ou C₈-C₁₈-arylalkylène et x vaut un nombre entre 0 et 1,9.

8. Masses moulées selon la revendication 7, **caractérisées en ce que** R₁ et R₂ sont identiques ou différents et signifient méthyle, éthyle, propyle, butyle ou phényle.

9. Masses moulées selon la revendication 7 ou 8, **caractérisées en ce que** R₃ signifie un groupe C₁-C₆-alkylène linéaire, phénylène ou naphtylène.

10. Masses moulées selon l'une ou plusieurs des revendications 7 à 9, **caractérisées en ce que** R₃ signifie méthylène, éthylène ou propylène.

11. Masses moulées selon l'une ou plusieurs des revendications 7 à 10, **caractérisées en ce que** x vaut un nombre entre 0 et 1,5.

12. Masses moulées selon l'une ou plusieurs des revendications 7 à 11, **caractérisées en ce que** x vaut 1,25 ou 1,0 ou 0.

13. Masses moulées selon l'une ou plusieurs des revendications 7 à 12, **caractérisées en ce qu'**elles contiennent l'agent ignifuge en des quantités de 1 à 50% en poids, par rapport à la masse moulée.

14. Masses moulées selon l'une ou plusieurs des revendications 7 à 13, **caractérisées en ce qu'**elles contiennent ou **en ce que** l'agent ignifuge contient, comme composant B, un composé de phosphore, d'azote ou de phosphore-azote.

15. Masses moulées selon l'une ou plusieurs des revendications 7 à 14, **caractérisées en ce qu'**il s'agit, pour le composant B, de mélamine-phosphate, de dimélamine-phosphate, de mélamine-pyrophosphate, de mélamine-polyphosphates, de mélam-polyphosphates, de mélem-polyphosphates et/ou de mélon-polyphosphates et/ou de produits de condensation de mélamine, tels que le mélam, le mélem et/ou le mélon.

16. Masses moulées selon l'une ou plusieurs des revendications 7 à 14, **caractérisées en ce qu'**il s'agit, pour le composant B, de phosphates contenant de l'azote des formules (NH₄)_{y}H_{3-y}PO₄ ou, selon le cas, (NH₄PO₃)_{z}, y valant 1 à 3 et z valant 1 à 10 000.

17. Masses moulées selon l'une ou plusieurs des revendications 7 à 14, **caractérisées en ce qu'**il s'agit, pour le composant B, de composés azotés des formules (III) à (VIII) ou de mélanges de ceux-ci 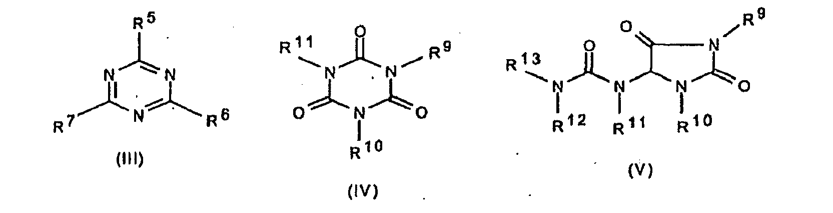 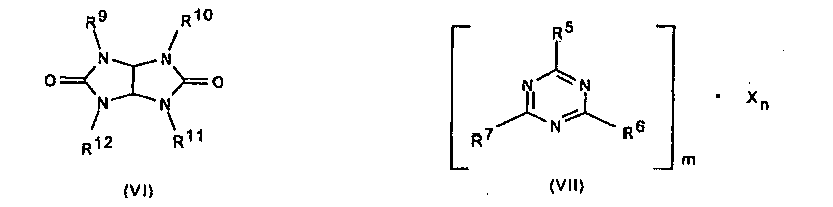 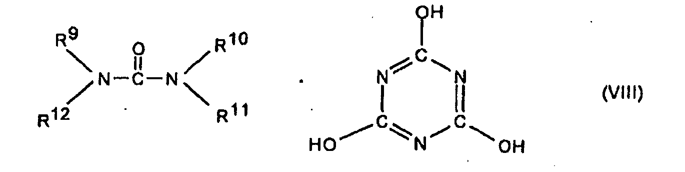 où
R⁵ à R⁷ signifient hydrogène ; C₁-C₈-alkyle, C₅-C₁₆-cycloalkyle ou C₅-C₁₆-alkylcycloalkyle, le cas échéant substitués par une fonction hydroxy ou une fonction C₁-C₄-hydroxyalkyle, C₂-C₈-alcényle ; C₁-C₈-alcoxy, C₁-C₈-acyle, C₁-C₈-acyloxy, C₆-C₁₂-aryle ou C₆-C₁₂-arylalkyle, -OR⁸ et -N(R⁸)R⁹, ainsi que les radicaux N-alicycliques ou N-aromatiques,
R⁸ signifie hydrogène ; C₁-C₈-alkyle, C₅-C₁₆-cycloalkyle ou C₅-C₁₆-alkylcycloalkyle, le cas échéant substitués par une fonction hydroxy ou une fonction C₁-C₄-hydroxyalkyle, C₂-C₈-alcényle ; C₁-C₈-alcoxy, C₁-C₈-acyle, C₁-C₈-acyloxy ou C₆-C₁₂-aryle ou C₆-C₁₂-arylalkyle,
R⁹ à R¹³ sont les mêmes groupes que R⁸ ainsi que -O-R⁸,
m et n signifient, indépendamment l'un de l'autre, 1, 2, 3 ou 4,
X signifie des acides, qui peuvent former des produits d'addition avec des composés triaziniques (III).

18. Masses moulées selon l'une ou plusieurs des revendications 7 à 14, **caractérisées en ce qu'**il s'agit, pour le composant B, d'esters oligomères de l'isocyanurate de tris(hydroxyéthyle) avec des acides polycarboxyliques aromatiques, de benzoguanamine, d'isocyanurate de tris(hydroxyéthyle), d'allantoïne, de glycolurile, de mélamine, de cyanurate de mélamine, de dicyanodiamide et/ou de guanidine.

19. Masses moulées selon l'une ou plusieurs des revendications 7 à 18, **caractérisées en ce qu'**elles contiennent le composant B en des quantités de 1 à 30% en poids, par rapport à la masse moulée.

20. Masses moulées selon l'une ou plusieurs des revendications 7 à 19, **caractérisées en ce qu'**elles contiennent ou **en ce que** l'agent ignifuge contient en outre, comme composant C, un composé inorganique synthétique et/ou un produit minéral.

21. Masses moulées selon la revendication 20, **caractérisées en ce qu'**il s'agit, pour le composant C, d'un composé oxygéné du silicium, de composés du magnésium, de carbonates métalliques de métaux du deuxième groupe principal du système périodique, de phosphore rouge, de composés du zinc ou d'aluminium.

22. Masses moulées selon la revendication 20 ou 21, **caractérisées en ce qu'**il s'agit, pour les composés oxygénés du silicium, de sels et d'esters de l'acide orthosilicique et de ses produits de condensation, de silicates, de zéolithes et de silices, de poudre de verre, de verre-céramique ou de céramique ; pour les composés de magnésium, d'hydroxyde de magnésium, d'hydrotalcites, de carbonate de magnésium ou de carbonates de magnésium-calcium ; pour les composés du zinc, d'oxyde, de stannate, d'hydroxystannate, de phosphate, de borate ou de sulfures de zinc ; pour les composés d'aluminium, d'hydroxyde ou de phosphate d'aluminium.
